# EUROPEAN PATENT SPECIFICATION

(11) **EP 1 809 927 B1**
(45) Date of publication and mention of the grant of the patent: **02.02.2011**
(21) Application number: 05787646.8
(22) Date of filing: 16.09.2005
(51) Int. Cl.: F16H 55/52, F16H 9/16

(54) **NOISE DAMPER FOR A DRIVEN PULLEY OF A CONTINUOUSLY VARIABLE TRANSMISSION**
GERÄUSCHDÄMPFER FÜR EINE ANGETRIEBENE ROLLE EINES STUFENLOSEN GETRIEBES
DISPOSITIF INSONORISANT DESTINE A UNE POULIE ENTRAINEE D'UNE TRANSMISSION A VARIATION CONTINUE

(30) Priority: 16.09.2004 US 610365 P
(43) Date of publication of application: 25.07.2007
(73) Proprietor: CVTECH R & D INC., Drummondville, Québec J2C 6X9 (CA)
(72) Inventor: LABBE, Jocelyn, St-Germain-de-Grantham, Québec CA J0C 1KO (CA)
(74) Representative: Reinhardt, Harry
(86) International application number: PCT/CA2005/001419
(87) International publication number: WO 2006/029534

(56) References cited:
- WO-A-99/54647
- WO-A-03/071162
- CA-C- 1 300 405
- US-A- 3 161 071
- US-A- 3 368 416
- US-A- 5 692 983
- US-A- 5 797 816
- US-B1- 6 322 466

## Description

invention relates generally to continuously variable transmissions (CVTs), and more particularly to a noise damper for a driven pulley of a continuously variable transmission.

Continuously variable transmissions (CVTs) are commonly used on a wide range of vehicles, such as small cars or trucks, snowmobiles, golf carts, scooters, etc. They typically comprise a driving pulley mechanically connected to a motor, a driven pulley mechanically connected to wheels or a track, possibly through another mechanical device such as a gear box, and a trapezoidal drivebelt transmitting torque between the driving pulley and the driven pulley. A CVT automatically changes the ratio as required by load and speed conditions, providing an increased torque under high loads at low speeds and yet controlling the rotation speed of the motor as the vehicle accelerates. A CVT may be used with all kinds of motors, such as internal combustion engines or electric motors.

CA-1,300,405 published 12 May 1992 and WO-99/54647 A published 28 October 1999 both disclose a driven pulley for use in a continuously variable transmission, the driven pulley comprising a set of at least two symmetrically-disposed cam surfaces and a set of at least two cam followers mounted on a corresponding support and provided for engaging the respective cam surfaces

The sides of the drivebelt are, on each pulley, gripped between two opposite sheaves that are coaxially mounted around a corresponding main shaft. Generally, in each pulley of a conventional CVT, one sheave, usually called "fixed sheave", is rigidly connected to one end of the corresponding main shaft. The other sheave, usually called "movable sheave", is free to slide and/or rotate with reference to the fixed sheave by means of bushings or the like.

At a low vehicle speed, the winding diameter of the drivebelt at the driving pulley is minimal and the winding diameter of the driven pulley is maximal. This is referred to as the minimum ratio since there is the minimum number of rotations or fraction of rotation of the driven pulley for each full rotation of the driving pulley.

Generally, when the rotation speed of the driving pulley increases, its movable sheave moves closer to the fixed sheave thereof under the effect of a centrifugal mechanism. This forces the drivebelt to wind on a larger diameter on the driving pulley and, consequently, on a smaller diameter on the driven pulley. The drivebelt then exerts a radial force on the sheaves of the driven pulley in addition to the tangential driving force by which the torque is transmitted. This radial force urges the movable sheave of the driven pulley away from the fixed sheave thereof. It is counterbalanced in part by a return force, which is typically generated by a spring inside the driven pulley or another biasing mechanism. It is also counterbalanced by a force generated by the axial reaction of the torque applied by the drivebelt on the driven pulley. This is caused by a cam system that tends to move the movable sheave towards the fixed sheave as the torque increases.

The cam system typically comprises a cam having a plurality of symmetrically-disposed and inclined ramps on which respective followers are engaged. The followers are usually sliding buttons or rollers. The set of ramps or the set of followers is mounted at the back side of the movable sheave and the other is directly or indirectly connected to the main shaft in a rigid manner. The closing effect of the cam system on the drivebelt tension is then somewhat proportional to output torque.

Generally, at the maximum vehicle speed, the ratio is maximum as there is the maximum number of rotations or fraction of rotation of the driven pulley for each full rotation of the driving pulley. Then, when the vehicle speed decreases, the rotation speed of the driving pulley typically decreases as well since the rotation speed of the motor decreases. This causes, at some point, a decrease of the winding diameter of the driving pulley and a decrease of the radial force exerted by the drivebelt on the sides of the sheaves at the driven pulley. Ultimately, the driven pulley is allowed to have a larger winding diameter as the spring or the biasing mechanism moves the movable sheave towards the fixed sheave.

Some CVTs are provided with reversible driven pulleys. A reversible driven pulley operates in a similar fashion than that of a conventional one, with the exception that the transmission ratio can be controlled during motor braking or when the vehicle is traveling in reverse. For instance, during motor braking, the torque is no longer coming from the motor to the wheels or track, but in the opposite direction. Similarly, when accelerating in reverse, the torque and the rotation will be in the reverse direction, the torque being transmitted from the motor to the wheels or tracks. A reversible driven pulley generally comprises a second set of ramps and a second set of followers (or two-sided followers). In use, one set of followers and its corresponding set of ramps are used when the torque is in one direction, the other set being used for the other direction.

A common problem to most driven pulleys is that in use, the movable sheave is always very slightly misaligned with reference to the shaft and the fixed sheave. This is due to the fact that the drivebelt winds on about only half of the pulley and that there is a small tolerance between the bushings supporting the movable sheave and the main shaft so as to allow movements of the movable sheave. This slight misalignment of parts causes some undesirable vibrations, and consequently, it generates noise. This noise was found to be made by the sliding buttons and their corresponding ramp. Because of the misalignment, each sliding button has the tendency to be pressed against its corresponding ramp in the quadrants where the drivebelt is winded, and then be very slightly out of engagement with its ramp in the opposite portion of its rotation cycle. The noise happens when a sliding button is urged against a ramp. This happens more than 150 times per second for a driven pulley with three sliding buttons rotating at 3 000 rpm. A sliding movement was also observed between the sliding buttons and their ramps in a portion of its rotation cycle.

Another problem associated with some driven pulleys is experienced in some reversible models. The problem with reversible driven pulleys is that the transition from a forward mode to a motor braking or reverse mode generates an undesirable shock and some noise caused by sliding buttons when they come into contact with an opposite set of ramps. This violent shock is highly undesirable, even though the driven pulley can withstand them. Shocks and noise are also created when the sliding buttons lift away from the ramps and get back suddenly on the same ramps. It should be noted that reversible driven pulleys may also be subjected to the problem of noise and vibrations caused by the misalignment of parts, as explained earlier.

Accordingly, a solution that addresses at least some of the above-mentioned problems is sought.

It was discovered that a solution to the above-mentioned problems is to provide what is referred to as a "noise damper" between the base of each sliding button and its mounting socket.

It is therefore an object of this invention to provide a noise damper for damping the noise of a driven pulley.

In one aspect, the present invention provides a driven pulley for use in a continuously variable transmission, the driven pulley comprising a set of at least two symmetrically-disposed cam surfaces and a set of at least two cam followers mounted on a corresponding support and provided for engaging the respective cam surfaces, the driven pulley being characterized in that it comprises a noise damper disposed between each cam follower and its corresponding support.

In another aspect, the present invention provides a method of damping noise generated by a driven pulley of a continuously variable transmission having cam followers to be mounted to corresponding supports, the method comprising the steps of providing a noise damper on each cam follower; and inserting each damper and the corresponding cam follower in the corresponding support.

Further details of these and other aspects of the present invention will be apparent from the detailed description and figures included below.

Reference is now made to the accompanying figures in which:
FIG. 1 is a perspective view of an example of a conventional driven pulley incorporating noise dampers;
FIG. 2. is an exploded view of the driven pulley shown in FIG. 1;
FIG. 3 is an enlarged side view showing one of the sliding buttons with the noise damper in the driven pulley of FIG. 1;
FIG. 4 is a perspective view showing an example of a sliding button on which a noise damper is installed;
FIG. 5 is an exploded view of the sliding button and the noise damper shown in FIG. 4;
FIG. 6 is a side view showing an example of a double-sided sliding button provided with a corresponding double-sided noise damper, the sliding button being shown with its corresponding ramps as used in a reversible driven pulley;
FIG. 7 is a perspective view of the sliding button and the corresponding noise damper shown in FIG. 6; and
FIG. 8 is an exploded view of the sliding button and the corresponding noise damper shown in FIGS. 6 and 7.

Generally, a CVT comprises a driving pulley, a driven pulley and a trapezoidal belt to transmit the torque therebetween. The driving pulley is mechanically connected to a motor while the driven pulley 10 is mechanically connected to the wheels or tracks of a vehicle, possibly through another mechanical device such as a gear box. Notably, a CVT is commonly used on vehicles, such as small cars or trucks, snowmobiles, golf carts, scooters. etc. However, a CVT may also be used in machines that are not vehicles. The CVT is designed to automatically change the transmission ratio as required by load and speed conditions, providing an increased torque under high loads at low speeds and yet controlling the rotation speed of the motor as the vehicle accelerates.

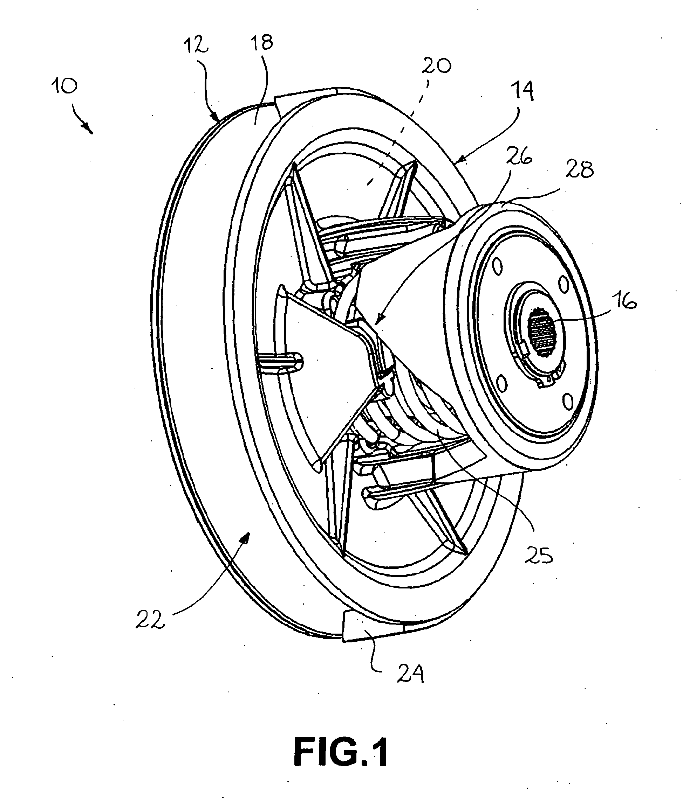

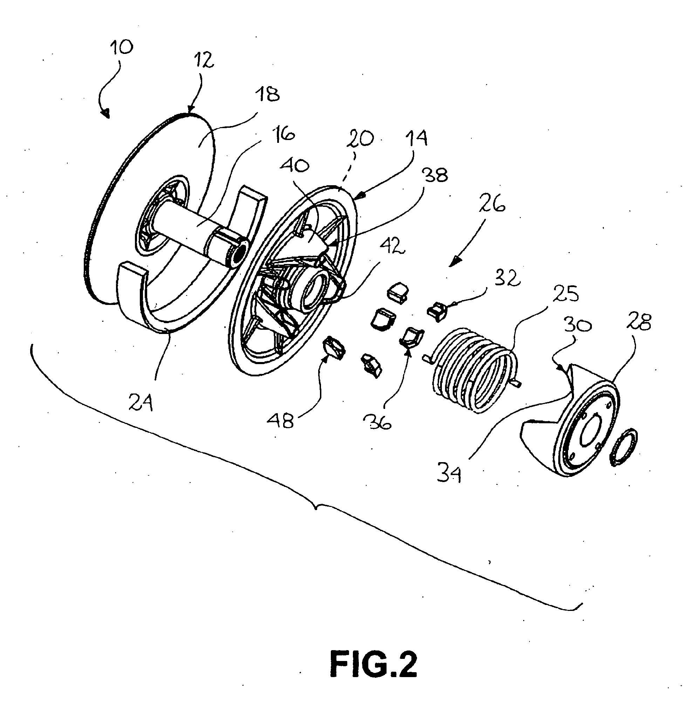

Referring concurrently to FIGS. 1 and 2, an example of a driven pulley 10 is shown. The driven pulley 10 comprises two conical sheaves 12, 14 that are mounted around a main shaft 16 and which are opposite each other. One of the conical sheaves 12 is fixed in position, rigidly connected to the shaft 16 such that it is prevented from rotating with reference thereto. The other conical sheave 14 is movable such that it has two degrees of freedom. Particularly, the movable sheave 14 is free to rotate and slide axially with reference to the shaft 16.

Each of the sheaves 12, 14 has an inner conical wall facing the other identified by reference numerals 18, 20 respectively. The inner conical walls 18, 20 define a V-shaped belt receiving groove 22 for receiving a trapezoidal drive belt 24 (partly shown) as mentioned above. The belt 24 is wound around approximately half of the driven pulley 10 and the sides of the belt 24 are gripped between the two conical walls 18, 20.

The belt 24 is adapted to exert both a tangential driving force to transmit torque and a radial force on the sheaves 12, 14 of the driven pulley 10 to urge the movable sheave 14 of the driven pulley 10 away from the fixed sheave 12 thereof. The radial force that can be exerted by the belt 24 is counterbalanced in part by a return force, which is typically generated by a biasing mechanism. In this exemplary embodiment a helicoidal torsion spring 25 is coaxially mounted around the shaft 16 adjacent to the movable sheave 14 to act as the biasing mechanism.

Furthermore, the driven pulley 10 comprises a cam system 26 that tends to move the movable sheave 14 towards the fixed sheave 12 as the torque increases. The closing effect of the cam system 26 on the drive belt tension is somewhat proportional to output torque.

The cam system 26 comprises a cam 28 having at least two symmetrically-disposed cam surfaces 30 on which respective followers 32 are engaged. The set of cam surfaces 34 or the set of followers 32 is mounted at the back side of the movable sheave 14 and the other is directly or indirectly connected to the main shaft 16 in a rigid manner.

In the exemplary embodiment shown in FIGS. 1 and 2, the cam 28 has a plurality of cam surfaces 30 that are provided as inclined ramps 34, and cam followers 32 that are provided as sliding buttons 36. Notably, the cam followers 32 may also be provided as rollers or a combination of rollers and sliding buttons. Each of the sliding buttons 36 is mounted to a respective support 38. The sliding button 36 is preferably made of a hard and resistant material having a low friction coefficient. The supports 38 are provided as axial projections 40 extending from the movable sheath 14 towards the cam 28. Each of the axial projections 40 has a socket 42 for receiving the base portion of a corresponding sliding button 36. More specifically, each sliding button 36 has a base portion 44 for insertion into the socket 42 and a main portion 46 for engagement with a ramp 34 of the cam 28.

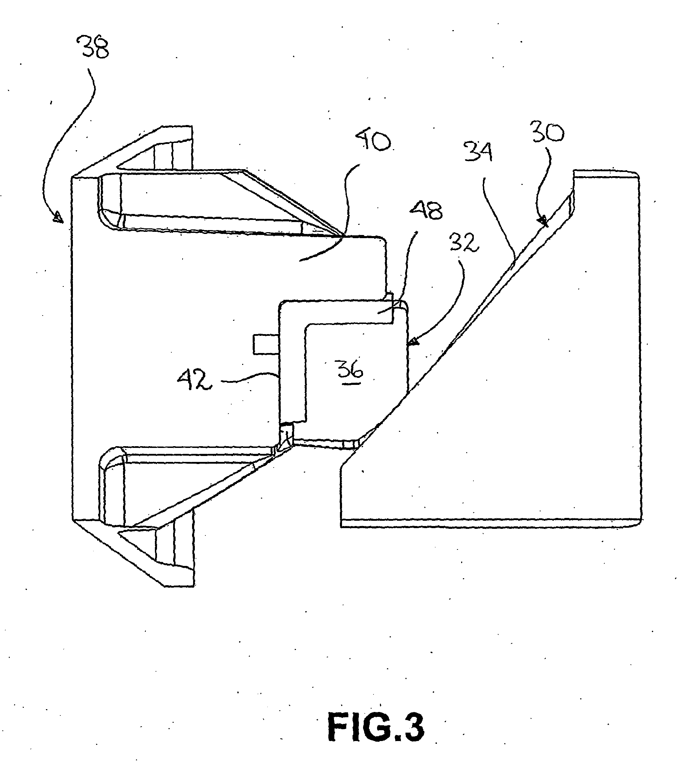

Now referring concurrently to FIGS. 2 to 5, the driven pulley 10 comprises a noise damper 48 disposed between each cam follower 32 and the respective support 38. In this exemplary embodiment, each noise damper 48 has an outside surface 50 and an inside surface 52 defining an opening 54 for receiving the base portion 44 of the corresponding sliding button 36. The inside surface 52 complements the shape of the base portion 44 and the outside surface 50 complements the shape of the socket 42. Thus, the inside U-shaped surface 52 is configured to mate with the base portion 44 and the outside surface 50 is configured to at least partially snugly fit within the socket 42 thereby retaining the sliding button 36 in the respective support 38. It should be noted at this point that when rollers are used as cam followers 32, the axle of each roller can be directly or indirectly supported by the damper 48. The dampers 48, in the case of rollers, can be also provided within the rollers themselves or at the level of the pins.

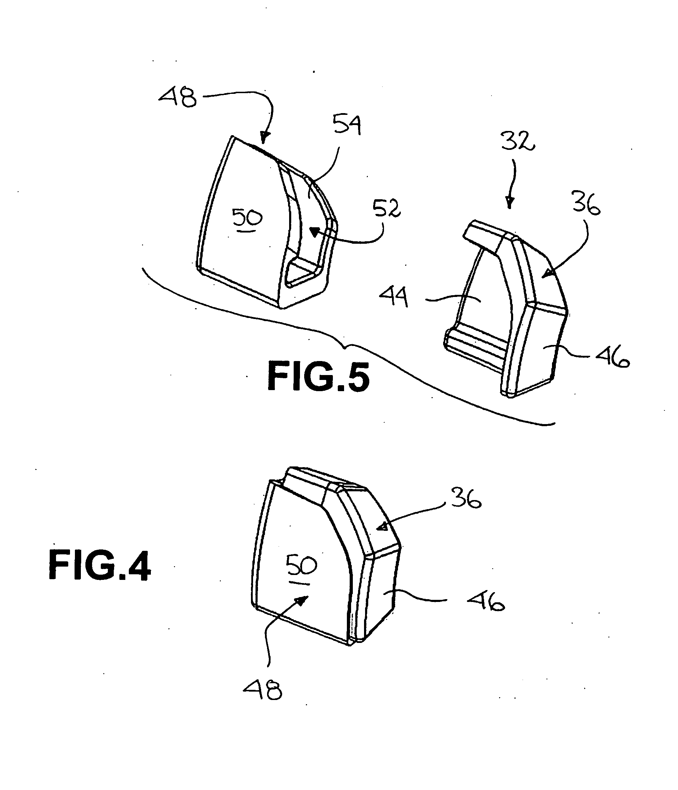

More specifically, FIGS. 4 and 5 show the damper 48 and the sliding button 36 as a pre-assembled unit and as separate entities, respectively. The damper 48 is adapted to mate with the base portion 44 of the sliding button 36 forming a pre-assembled unit adapted for engagement with the respective support 38. More specifically, the damper 48 is configured to engulf the base portion 44 forming a pre-assembled unit adapted for insertion into the socket 42. Referring particularly to FIG. 5, it can be seen that the opening 54 is defined by the inside surface 52 allowing for the base portion 44 to slidably engage therein. The main portion 46 of the sliding button 36 remains outside the opening 54 and is in abutting relationship with the damper 48 when the base portion 44 is fully engaged in position.

In one possible embodiment, the base portion 44 of the sliding button 36 is retrofit for engagement with the damper 48, which itself is adapted to fit into the original mounting socket of an existing driven pulley. Particularly, the base portion 44 is made thinner and shorter to mate with the damper 48 such that the combination thereof is substantially the same size as the original sliding buttons functioning without a noise damper. It is advantageous to retrofit existing driven pulleys or to install noise dampers on newly manufactured driven pulleys without the need to change the design thereof. This is a cost effective way of incorporating dampers into an existing CVT. Of course, it is also possible to redesign the parts of a CVT to accommodate noise dampers in relation to a sliding button, in particular when working with new pulley designs.

In the case of a vehicle with a CVT, damping is particularly advantageous during the transition from acceleration and motor braking. Vibrations and shocks are caused by the cam followers 32 disengaging and then reengaging with the cam surfaces 30. Also, in use, the noise dampers 48 help keep the sliding buttons 36 in engagement with their corresponding ramp 34 in spite of the uneven loading force caused by the drive belt 24. The dampers 48 can further compensate for very small changes in the spacing between the cam surfaces 30 and cam followers 32 caused by slight misalignments thereby promoting noise reduction. The dampers 48 advantageously help increase the useful life of the parts by absorbing vibrations that cause stresses.

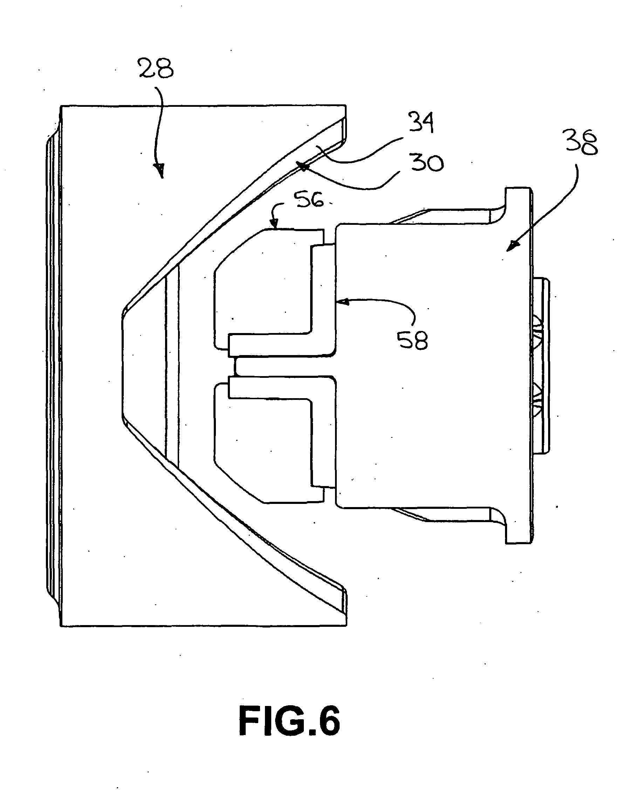

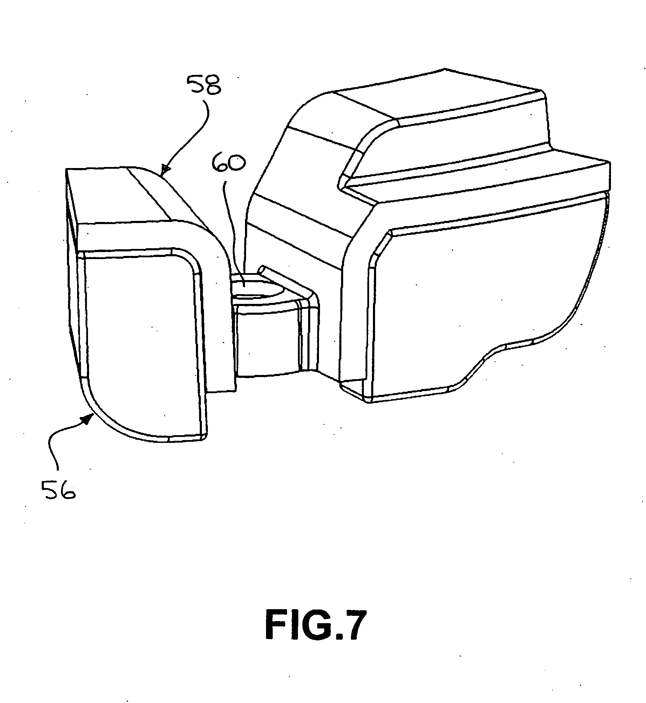

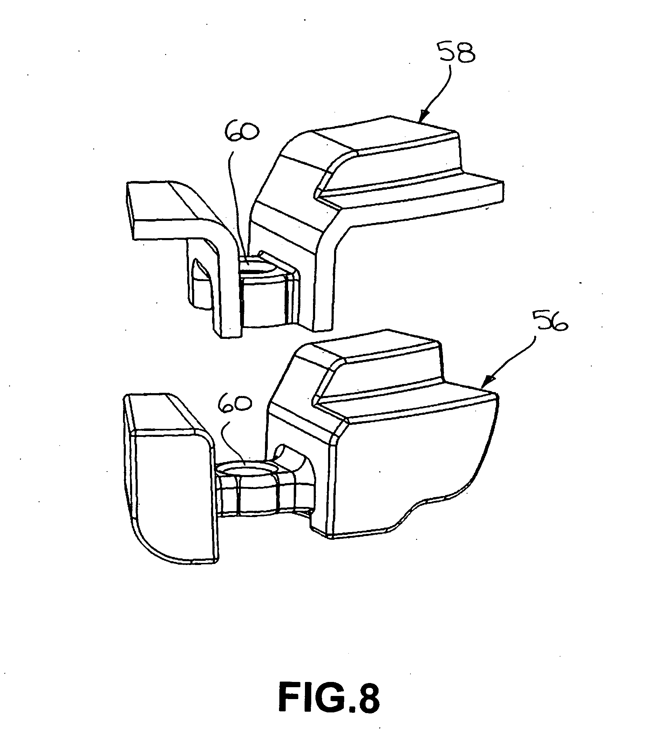

In the case of reversible driven pulleys, using double-sided sliding buttons with a double-sided noise damper is a real benefit in noise reduction. Referring concurrently to FIGS. 6 to 8, an embodiment of a double-sided sliding button 56 engaged with a double-sided noise damper 58 is illustrated. The pre-assembled unit, as shown in FIG. 7, is adapted to be mounted to the respective support by way of fixation means as shown in FIG. 6. Particularly, the double-sided noise damper 58 complements the shape of the corresponding sliding button 56 and both parts define a central bore 60 for receiving an attachment screw (not shown). It should be noted that it is nevertheless possible to use a pair of single-sided sliding buttons and a corresponding pair of single-sided noise dampers, or even a combination of double and single parts, to achieve the same result in the case of a reversible driven pulley.

As can be appreciated, the present invention can solve problems of excessive noise and vibrations in a CVT in a very simple and convenient manner.

## Claims

1. A driven pulley (10) for use in a continuously variable transmission, the driven pulley comprising a set of at least two symmetrically-disposed cam surfaces (30) and a set of at least two cam followers (32) such as sliding buttons (36) or rollers mounted on a corresponding support (38) and provided for engaging the respective cam surfaces, the driven pulley (10) being **characterized in that** it comprises a separate noise damper (48) disposed between each cam follower (32) and its corresponding support (38).

2. The driven pulley as defined in claim 1, **characterized in that** each of the supports (38) includes a socket (42), at least a portion of the corresponding damper (48) and the corresponding cam follower (32) being inserted into the socket (42).

3. The driven pulley as defined in claim 1 or 2, **characterized in that** each cam follower (32) has a base portion (44) that is engulfed by the corresponding damper (48).

4. The driven pulley as defined in claim 3, **characterized in that** each damper (48) defines an opening (54) that complements the shape of the base portion (44) of the corresponding cam follower (32) for snugly receiving the base portion therein.

5. The driven pulley as defined in any one of claims 1 to 4, **characterized in that** the dampers (48) and the cam followers (32) are made of different materials.

6. The driven pulley as defined in any one of claims 1 to 5, **characterized in that** the cam followers (32) are double-sided cam followers, wherein the damper is preferably a double-sided damper (58) that complements the shape of the double-sided cam follower for mating therewith.

7. Use of a noise damper for damping noise generated by a driven pulley (10) of a continuously variable transmission having cam followers (32) such as sliding buttons (36) or rollers to be mounted to corresponding supports (38),
wherein the noise damper (48) is provided on each cam follower (32); each damper (48) and the corresponding cam follower (32) are inserted in a corresponding one of the supports (38),
**characterized in that** a separate noise damper (48) is used between each cam follower (32) and its corresponding support (38).

8. The use as defined in claim 7, **characterized in that** each of the supports (38) includes a socket (42), at least a portion of the corresponding damper (48) and the corresponding cam follower (32) being inserted into the socket.

9. The use as defined in claim 7 or 8, **characterized in that** each cam follower (32) has a base portion (44) that is engulfed by the corresponding damper (48).

10. The use as defined in claim 9, **characterized in that** each damper (48) defines an opening (54) that complements the shape of the base portion (44) of the corresponding cam follower (32) for snugly receiving the base portion (44) therein.

11. The use as defined in any one of claims 7 to 10, **characterized in that** the dampers (48) and the cam followers (32) are made of different materials.

12. The use as defined in any one of claims 7 to 11, **characterized in that** the cam followers (32) are double-sided cam followers, wherein the damper is preferably a double-sided damper (58) that complements the shape of the double-sided cam follower for mating therewith.

13. The use as defined in claim 7, **characterized in that** the driven pulley has a plurality of cam followers (32), a plurality of cam follower supports (38), and a plurality of cam surfaces (30),
wherein a noise damper (48) is inserted between a base portion (44) of each cam follower (32) and a corresponding one of the cam follower supports (38), each base portion being engulfed (38) within the correspondingdamper;
wherein during operation of the driven pulley (10) the noise dampers help keep the cam followers (32) in engagement with their corresponding cam surfaces despite a variation of a loading force on the cam followers during a rotation cycle of the driven pulley and compensate for very small changes in the spring between the cam surfaces (30) and cam followers (32) caused by slight misalignment.

## Patentansprüche

1. Angetriebene Riemenscheibe (10) für die Verwendung in einem stufenlos veränderlichen Getriebe, wobei die angetriebene Riemenscheibe einen Satz von mindestens zwei symmetrisch angeordneten Nockenoberflächen (30) und einen Satz von mindesten zwei Nockenfolgern (32) umfasst, wie auf eine entsprechende Halterung (38) montierte Gleitnippel (36) oder Rollen, die in die Nockenoberflächen eingreifen, wobei die angetriebene Riemenscheibe (10) **dadurch gekennzeichnet ist, dass** sie separate Geräuschdämpfer (48) enthält, die zwischen jedem Nockenfolger (32) und der ihm entsprechenden Halterung (38) liegen.

2. Angetriebene Riemenscheibe nach Anspruch 1, **dadurch gekennzeichnet, dass** jede der Halterungen (38) eine Muffe (42) enthält, wobei mindestens ein Teil des Dämpfers (48) und des entsprechenden Nockenfolgers (32) in die Muffe (42) eingefügt ist.

3. Angetriebene Riemenscheibe nach Anspruch 1 oder 2, **dadurch gekennzeichnet, dass** jeder der Nockenfolger (32) ein Unterteil (44) besitzt, das vom entsprechenden Dämpfer (48) umhüllt ist.

4. Angetriebene Riemenscheibe nach Anspruch 3, **dadurch gekennzeichnet, dass** jeder Dämpfer (48) eine Öffnung (54) definiert, die die Form des Unterteils (44) des entsprechenden Nockenfolgers (32) ergänzt und in die sich das Unterteil genau einpasst.

5. Angetriebene Riemenscheibe nach einem der Ansprüche 1 bis 4, **dadurch gekennzeichnet, dass** die Dämpfer (48) und die Nockenfolger (32) aus unterschiedlichen Werkstoffen hergestellt sind.

6. Angetriebene Riemenscheibe nach einem der Ansprüche 1 bis 5, **dadurch gekennzeichnet, dass** die Nockenfolger (32) doppelseitige Nockenfolger sind, und wobei der Dämpfer vorzugsweise ein doppelseitiger Dämpfer (58) ist, der die Form des doppelseitigen Nockenfolgers vervollständigt und sich an ihn anpasst.

7. Verwendung eines Geräuschdämpfers zum Dämpfen des von der angetriebenen Riemenscheibe (10) eines stufenlos veränderlichen Getriebes mit Nockenfolgern (32), wie auf entsprechende Halterungen (38) montierte Gleitnippel (36) oder Rollen, erzeugten Geräuschs,
wobei es für jeden Nockenfolger (32) einen Geräuschdämpfer (48) gibt, und wobei jeder Dämpfer (48) und sein entsprechender Nockenfolger (32) in eine der entsprechenden Halterungen (38) eingesetzt werden,
**dadurch gekennzeichnet, dass** ein separater Geräuschdämpfer (48) zwischen jedem Nockenfolger (32) und dessen entsprechender Halterung (38) verwendet wird.

8. Verwendung nach Anspruch 7, **dadurch gekennzeichnet, dass** jede der Halterungen (38) eine Muffe (42) enthält, wobei mindestens ein Teil des entsprechenden Dämpfers (48) und des entsprechenden Nockenfolgers (32) in die Muffe eingeführt ist.

9. Verwendung nach einem der Ansprüche 7 oder 8, **gekennzeichnet dadurch, dass** jeder Nockenfolger (32) ein Unterteil (44) besitzt, das vom entsprechenden Dämpfer (48) umhüllt wird.

10. Verwendung nach Anspruch 9, **gekennzeichnet dadurch, dass** jeder Dämpfer (48) eine Öffnung (54) definiert, die die Form des Unterteils (44) des entsprechenden Nockenfolgers (32) vervollständigt und in die sich das Unterteil genau einpasst.

11. Verwendung nach einem der Ansprüche 7 bis 10, **gekennzeichnet dadurch, dass** die Dämpfer (48) und die Nockenfolger (32) aus verschiedenen Werkstoffen hergestellt sind.

12. Verwendung nach einem der Ansprüche 7 bis 11, **gekennzeichnet dadurch, dass** die Nockenfolger (32) doppelseitige Nockenfolger sind, wobei der Dämpfer vorzugsweise ein doppelseitiger Dämpfer (58) ist, der die Form des doppelseitigen Nockenfolgers vervollständigt und sich an ihn anpasst.

13. Verwendung nach Anspruch 7, **dadurch gekennzeichnet, dass** die angetriebene Riemenscheibe eine Vielzahl von Nockenfolgern (32), eine Vielzahl von Nockenfolgerhalterungen (38) und eine Vielzahl von Nockenoberflächen (30) besitzt,
wobei ein Geräuschdämpfer (48) zwischen dem Unterteil (44) jedes Nockenfolgers (32) und der entsprechenden Nockenfolgerhalterung (38) eingefügt wird und jedes Unterteil (38) in den entsprechenden Dämpfer eingesetzt ist;
wobei während des Betriebes der angetriebenen Riemenscheibe (10) die Geräuschdämpfer dazu beitragen, die Nockenfolger (32) in Kontakt mit ihren entsprechenden Nockenoberflächen zu halten, trotz der Veränderung der Belastungskraft auf die Nockenfolger während eines Drehzyklus der angetriebenen Riemenscheibe, und sehr kleine Veränderungen des Abstands zwischen den Nockenoberflächen (30) und den Nockenfolgern (32) ausgleichen, die durch einen leichten Ausrichtungsfehler hervorgerufen werden.

## Revendications

1. Poulie entraînée (10) destinée à être utilisée dans une transmission à variation continue, la poulie entraînée comprenant un ensemble d'au moins deux surfaces de came (30) disposées symétriquement, et un ensemble d'au moins deux suiveurs de came (32), tels que des boutons formant coulisseau (36) ou des galets, montés sur un support correspondant (38) et fournis afin de s'accoupler avec les surfaces de came respectives, la poulie entraînée (10) étant **caractérisée en ce qu'**elle comprend un amortisseur de bruit séparé (48) disposé entre chaque suiveur de came (32) et son support correspondant (38).

2. Poulie entraînée selon la revendication 1, **caractérisée en ce que** chacun des supports (38) comprend un réceptacle (42), au moins une partie de l'amortisseur correspondant (48) et le suiveur de came correspondant (32) étant insérés dans ce réceptacle (42).

3. Poulie entraînée selon les revendications 1 ou 2, **caractérisée en ce que** chaque suiveur de came (32) comporte une partie de base (44) qui est enveloppée par l'amortisseur correspondant (48).

4. Poulie entraînée selon la revendication 3, **caractérisée en ce que** chaque amortisseur (48) définit une ouverture (54) qui complète la forme de la partie de base (44) du suiveur de came correspondant (32) afin d'y recevoir exactement la partie de base.

5. Poulie entraînée selon l'une quelconque des revendications 1 à 4, **caractérisée en ce que** les amortisseurs (48) et les suiveurs de came (32) sont faits de matériaux différents.

6. Poulie entraînée selon l'une quelconque des revendications 1 à 5, **caractérisée en ce que** les suiveurs de came (32) sont des suiveurs de came à deux faces, et où l'amortisseur est de préférence un amortisseur à deux faces (58) qui complète la forme du suiveur de came à deux faces afin de l'épouser.

7. Utilisation d'un amortisseur de bruit afin d'amortir le bruit généré par une poulie entraînée (10) d'une transmission à variation continue possédant des suiveurs de came (32) tels que des boutons formant coulisseau (36) ou des galets, pour être montés sur des supports correspondants (38),
dans laquelle l'amortisseur de bruit (48) est fourni sur chaque suiveur de came (32); chaque amortisseur (48) et suiveur de came correspondant (32) sont insérés dans un des supports correspondants (38),
**caractérisée en ce qu'**un amortisseur de bruit séparé (48) est utilisé entre chaque suiveur de came (32) et son support correspondant (38).

8. Utilisation selon la revendication 7, **caractérisée en ce que** chacun des supports (38) comprend un réceptacle (42), au moins une partie de l'amortisseur (48) correspondant et le suiveur de came (32) correspondant étant insérés dans le réceptacle.

9. Utilisation selon les revendications 7 ou 8, **caractérisée en ce que** chaque suiveur de came (32) possède une partie de base (44) qui est enveloppée par l'amortisseur correspondant (48).

10. Utilisation selon la revendication 9, **caractérisée en ce que** chaque amortisseur (48) définit une ouverture (54) qui complète la forme de la partie de base (44) du suiveur de came (32) correspondant afin d'y recevoir exactement la partie de base.

11. Utilisation selon l'une quelconque des revendications 7 à 10, **caractérisée en ce que** les amortisseurs (48) et les suiveurs de came (32) sont fait de matériaux différents.

12. Utilisation selon l'une quelconque des revendications 7 à 11, **caractérisée en ce que** les suiveurs de came (32) sont des suiveurs de came à deux faces, dans laquelle l'amortisseur est de préférence un amortisseur (58) à deux faces, qui complète la forme du suiveur de came à double face afin de l'épouser.

13. Utilisation selon la revendication 7, **caractérisée en ce que** la poulie entraînée possède plusieurs suiveurs de came (32), plusieurs supports à suiveurs de came (38) et plusieurs surfaces de came (30),
dans laquelle un amortisseur de bruit (48) est inséré entre la partie de base (44) de chaque suiveur de came (32) et un des support de suiveur de came (38) correspondant, chaque partie de base étant enveloppée (38) par l'amortisseur correspondant;
dans laquelle, pendant le fonctionnement de la poulie entraînée (10), les amortisseurs de bruit contribuent à garder les suiveurs de came (32) engagés avec les surfaces de came correspondantes malgré une variation d'une force de chargement sur les suiveurs de came au cours d'un cycle de rotation de la poulie entraînée et compensent pour des modifications minimes de l'espacement entre la surface de came (30) et les suiveurs de came (32) causées par un léger désalignement.
